# EUROPEAN PATENT APPLICATION

(11) **EP 4 782 513 A1**
(43) Date of publication of application: **29.07.2026**
(21) Application number: 24881282.8
(22) Date of filing: 05.09.2024
(51) Int. Cl.: C09J 133/00, H01M 4/62, H01M 10/0525

(54) **BINDER AND PREPARATION METHOD THEREFOR, BATTERY AND ELECTRIC DEVICE**

(30) Priority: 28.10.2023 CN 202311428036
(71) Applicant: HUAWEI TECHNOLOGIES CO., LTD., Shenzhen 518129 (CN)
(72) Inventor: TANG, Zhehao, Shenzhen, Guangdong 518129 (CN); XIA, Shengan, Shenzhen, Guangdong 518129 (CN)
(74) Representative: Gill Jennings & Every LLP
(86) International application number: PCT/CN2024/117188
(87) International publication number: WO 2025/086916

(57) **Abstract**

Provided are a binder and a preparation method thereof, a battery, and a power-consuming device. The binder includes an acrylate polymer, a number-average molecular weight of the acrylate polymer is 10 kDa to 3000 kDa, a molecular structure of the acrylate polymer contains side-chain groups, and the side-chain groups include a fluorine-containing chain segment, a cyano chain segment, and a crosslinkable chain segment, where a fluorine element accounts for 3% to 30% by mass in the molecular structure, and a cyano group accounts for 10% to 40% by mass in the molecular structure.

## Description

### CROSS-REFERENCE TO RELATED APPLICATIONS

This application claims priority to Chinese Patent Application No. 202311428036.5, filed with the China National Intellectual Property Administration on October 28, 2023 and entitled "BINDER AND PREPARATION METHOD THEREOF, BATTERY, AND POWER-CONSUMING DEVICE", which is incorporated herein by reference in its entirety.

### TECHNICAL FIELD

This application relates to the field of battery materials, and specifically, to a binder and a preparation method thereof, a battery, and a power-consuming device.

### BACKGROUND

Currently, in a commercial lithium-ion battery, polyvinylidene difluoride (polyvinylidene difluoride, PVDF) is primarily used as a binder on a positive electrode side of the battery, and carboxymethyl cellulose (carboxymethyl cellulose, CMC) and styrene butadiene rubber (polymerized styrene butadiene rubber, SBR) are primarily used as a binder on a negative electrode side of the battery. A binder for a positive electrode plate needs to possess the following properties: (1) excellent adhesion performance; (2) ability to withstand high-voltage environments; and (3) resistance to organic electrolytes. PVDF dominates as a binder for a positive electrode of a battery due to its ultrahigh stability, electrolyte resistance, and high oxidation potential. However, in recent years, with the development of positive electrode materials, PVDF gradually encounters technical and commercial bottlenecks. First, with the development of high-nickel ternary positive electrode materials and layered oxide positive electrode materials for sodium-ion batteries, energy density of the positive electrode material continuously increases. Due to significant residual alkali on a surface of the material, resulting from a precursor and a synthesis process of the positive electrode material, the positive electrode material exhibits high alkalinity. During preparation of a positive electrode slurry, a binder and a positive electrode material need to be mixed, where a small amount of moisture creates a strongly alkaline environment for the positive electrode slurry. However, a PVDF binder undergoes degradation and crosslinking in a strongly alkaline environment, causing gelation of a slurry, which presents a jelly-like state. Consequently, this prevents successful processing into a positive electrode plate. To resolve the problem of PVDF gelation, existing alternative solutions include a polyimide binder and a polyacrylonitrile copolymer binder. As high-performance engineering plastic, polyimide offers ultrahigh stability and good resistance to solvents, heat, voltages, and the like. However, polyimide also suffers from several issues, such as excessive swelling in an electrolyte, poor rate performance, and high costs. Polyacrylonitrile copolymers, as a low-cost alternative, have also been widely studied. Strong interaction of cyano groups between molecular chains can also achieve strong bonding, but leads to high viscosity of its binder solution, posing processing challenges. In addition, an oxidation potential of the polyacrylonitrile copolymer is about 4.0 V. This is not suitable for an NCM battery system and an LCO battery system.

### SUMMARY

This application provides a binder and a preparation method thereof, a battery, and a power-consuming device, to improve stability and processability of the binder in alkaline environments, improve rate performance and an oxidation potential of the binder, and reduce a swelling rate in an electrolyte and reduce costs.

According to a first aspect, this application provides a binder. The binder includes an acrylate polymer, a number-average molecular weight of the acrylate polymer is 10 kDa to 3000 kDa, a molecular structure of the acrylate polymer contains side-chain groups, and the side-chain groups include a fluorine-containing chain segment, a cyano chain segment, and a crosslinkable chain segment, where a fluorine element accounts for 3% to 30% by mass in the molecular structure, and a cyano group accounts for 10% to 40% by mass in the molecular structure.

The binder in this application is primarily composed of the acrylate polymer. A fluorine atom is introduced into the fluorine-containing chain segment in the side-chain groups of the acrylate polymer. High electronegativity of F leads to high C-F bond energy. High bond energy can endow the acrylate polymer with a stable backbone structure, so that the acrylate polymer has excellent solvent resistance and oxidation resistance. In addition, low polarizability of the F atom leads to low molecular polarity of the prepared polymer, improving resistance to high voltages. The C-F bond can further undergo complexation with Li ions, improving ionic conductivity. The cyano group in the cyano chain segment in the side-chain groups provides excellent intermolecular forces. This endows the polymer with high rigidity and modulus, and can improve viscosity of a binder solution and stability of a slurry. In addition, the introduced cyano group with a strong coordination capability can undergo complexation with a transition metal on a surface of an electrode, to mask these active ions on the surface of the positive electrode, reducing decomposition of an electrolyte by the electrode. The crosslinkable chain segment in the side-chain groups can help form a chemically crosslinked network after the polymer is dried at a high temperature, improving shape stability. High crosslinking density can also reduce swelling in the electrolyte. Swelling in the electrolyte can be controlled by adjusting a ratio of crosslinkable monomers, achieving balance between electronic conductivity and ionic conductivity. Therefore, the binder in this application may have the following advantages: (1) The binder does not undergo degradation or crosslinking under highly alkaline conditions, fundamentally resolving a problem of potential gelation of a positive electrode slurry. (2) According to the design of a molecular chain segment structure, the introduction of the fluorine-containing chain segment, the cyano chain segment, and the crosslinkable chain segment can effectively improve an oxidation potential and bonding strength, and reduce swelling in an electrolyte, improving battery performance. (3) In this application, the binder features simple synthesis, unrestricted raw materials, and low costs, effectively addressing current issues of high price, shortage, and monopoly of PVDF materials.

In an optional implementation, a number of carbon atoms in the fluorine-containing chain segment is 2 to 8. In an optional implementation, a number of carbon atoms in the cyano chain segment is 2 to 4. In an optional implementation, a number of carbon atoms in the crosslinkable chain segment is 2 to 20. The number of carbon atoms in the fluorine-containing chain segment is 2 to 8, avoiding reduced adhesion caused by an outer layer of the polymer molecule being shielded by a fluorine chain. The number of carbon atoms in the cyano chain segment is 2 to 8, avoiding reduced adhesion caused by an outer layer of the polymer molecule being shielded by a cyano chain.

In an optional implementation, a polymerizable monomer for forming the fluorine-containing chain segment is selected from fluorine-containing alkenyl or fluorine-containing alkynyl. For example, the fluorine-containing chain segment is perfluoroalkyl. The perfluoroalkyl can contain a plurality of fluorine atoms, helping improve stability of the molecular structure of the acrylate polymer.

In an optional implementation, a polymerizable monomer for forming the cyano chain segment is selected from cyano-containing alkenyl or cyano-containing alkynyl.

In an optional implementation, a polymer monomer for forming the crosslinkable chain segment is selected from an alkenyl compound or alkynyl compound containing a group that is capable of undergoing a crosslinking reaction, where the group that is capable of undergoing a crosslinking reaction is selected from at least one of an epoxy group, an acetoacetate group, an amide group, a carboxyl group, or an N-substituted amide group. The crosslinkable chain segment can form a chemically crosslinked network structure after the acrylate polymer is dried at a high temperature, improving shape stability of the binder. The acrylate polymer with high crosslinking density can also reduce swelling of the binder in the electrolyte. In addition, with the addition of the crosslinkable chain segment containing the foregoing groups, swelling in the electrolyte can be controlled by adjusting a ratio of crosslinkable monomers, achieving balance between electronic conductivity and ionic conductivity.

In an optional implementation, a glass transition temperature of the binder is -20°C to 120°C. The binder with the glass transition temperature allows a higher processing temperature range and lowers ambient temperature requirements.

According to a second aspect, this application provides a method for preparing a binder, including:
adding a mixed monomer containing a first polymerizable monomer, a second polymerizable monomer, and a third polymerizable monomer to a solvent to undergo a polymerization reaction, and performing purification, to obtain an acrylate polymer; and
adding the acrylate polymer to a binder solution, to form a binder, where
the first polymerizable monomer is a fluorine-containing acrylate monomer, and the fluorine-containing acrylate monomer accounts for 20% to 80% by mass in the mixed monomer; the second polymerizable monomer is a cyano-containing monomer, and the cyano-containing monomer accounts for 20% to 80% by mass in the mixed monomer; the third polymerizable monomer is a crosslinkable monomer that contains no fluorine and no cyano group, and the crosslinkable monomer accounts for 1% to 10% by mass in the mixed monomer; and a number-average molecular weight of the acrylate polymer is 10 kDa to 3000 kDa.

The preparation method in this application includes the acrylate polymer formed through polymerization of the first polymerizable monomer, the second polymerizable monomer, and the third polymerizable monomer. The first polymerizable monomer is the fluorine-containing acrylate monomer containing a fluorine-containing chain segment in its molecule. The second polymerizable monomer contains a cyano chain segment. The third polymerizable monomer contains a polymerizable chain segment of another type. A fluorine atom is introduced into the fluorine-containing chain segment. High electronegativity of F leads to high C-F bond energy. High bond energy can endow the acrylate polymer with a stable backbone structure, so that the acrylate polymer has excellent solvent resistance and oxidation resistance. In addition, low polarizability of the F atom leads to low molecular polarity of the prepared polymer, improving resistance to high voltages. The C-F bond can further undergo complexation with Li ions, improving ionic conductivity. The cyano group in the cyano chain segment in the side-chain groups provides excellent intermolecular forces. This endows the polymer with high rigidity and modulus, and can improve viscosity of a binder solution and stability of a slurry. In addition, the introduced cyano group with a strong coordination capability can undergo complexation with a transition metal on a surface of an electrode, to mask these active ions on the surface of the positive electrode, reducing decomposition of an electrolyte by the electrode. The crosslinkable chain segment in the side-chain groups can help form a chemically crosslinked network after the polymer is dried at a high temperature, improving shape stability. High crosslinking density can also reduce swelling in the electrolyte. Swelling in the electrolyte can be controlled by adjusting a ratio of crosslinkable monomers, achieving balance between electronic conductivity and ionic conductivity. Therefore, the binder in this application may have the following advantages: (1) The binder does not undergo degradation or crosslinking under highly alkaline conditions, fundamentally resolving a problem of potential gelation of a positive electrode slurry. (2) According to the design of a molecular chain segment structure, the introduction of the fluorine-containing chain segment, the cyano chain segment, and the crosslinkable chain segment can effectively improve an oxidation potential and bonding strength, and reduce swelling in an electrolyte, improving battery performance. (3) In this application, the binder features simple synthesis, unrestricted raw materials, and low costs, effectively addressing current issues of high price, shortage, and monopoly of PVDF materials.

In an optional implementation, the fluorine-containing acrylate monomer accounts for 40% to 50% by mass in the mixed monomer.

In an optional implementation, the cyano-containing monomer accounts for 40% to 50% by mass in the mixed monomer.

In an optional implementation, the third polymerizable monomer accounts for 3% to 5% by mass in the mixed monomer.

In an optional implementation, a molecular formula of the fluorine-containing acrylate monomer is CH₂=CRCOO(CH₂)ₘCₙF₂ₙ₊₁, where R is H or CH₃, m ≥ 1, n ≥ 1, and m + n ≤ 12. Preferably, m is 1 to 2, and n is 1 to 4.

In an optional implementation, the cyano-containing monomer is selected from at least one of acrylonitrile, methacrylonitrile, or chloroacrylonitrile. These substances can easily undergo copolymerization with vinyl and (meth)acrylate groups.

In an optional implementation, the third polymerizable monomer is specifically a monomer that contains a crosslinkable group such as a carboxyl group, substituted acrylamide, glycidyl ether, and multi-functional silane, and that can undergo copolymerization with vinyl and (meth)acrylate groups. For example, the third polymerizable monomer contains at least one of an alkenyl group, an ether group, an amide group, and an ester group.

In an optional implementation, the third polymerizable monomer is selected from at least one of glycidyl (meth)acrylate, acetoacetoxyethyl methacrylate, (meth)acrylamide, (meth)acrylic acid, N-(n-butoxymethyl)acrylamide or N-(iso-butoxymethyl)acrylamide, diacetone acrylamide, or N-methylol acrylamide.

In an optional implementation, the mixed monomer further includes an auxiliary monomer, and the auxiliary monomer is selected from at least one of alkyl (meth)acrylate, hydroxyalkyl (meth)acrylate, styrene, vinylpyrrolidone, or vinyl acetate.

According to a third aspect, this application provides a battery, including a positive electrode plate, where the positive electrode plate includes a positive electrode active substance and a binder, and the binder is selected from the binder according to the first aspect of this application or the binder obtained by using the preparation method according to the second aspect of this application.

According to a fourth aspect, this application provides a power-consuming device, including a power-consuming component and the battery according to the third aspect of this application, where the battery supplies power to the power-consuming device.

For technical effects that can be achieved according to the third aspect and the fourth aspect, refer to the corresponding effect descriptions in the first aspect. Details are not described herein again.

For data in the foregoing possible implementations of this application, such as a number-average molecular weight of the acrylate polymer, a number of carbon atoms in each chain segment, a glass transition temperature, and a proportion of each monomer by mass, during measurement, all values within an engineering measurement error range should be understood as falling within the scope of this application.

### BRIEF DESCRIPTION OF DRAWINGS

FIG. 1 is a diagram of a working principle of a battery according to an embodiment of this application; and
FIG. 2 is a diagram of a molecular structure of an acrylate polymer according to an embodiment of this application.

Reference numerals:
11: positive electrode plate; 12: negative electrode plate; 13: separator; 14: electrolyte; 21: fluorine-containing chain segment; 22: cyano chain segment; 23: crosslinkable chain segment.

### DESCRIPTION OF EMBODIMENTS

To make the objectives, technical solutions, and advantages of this application clearer, the following further describes this application in detail with reference to the accompanying drawings.

Terms used in the following embodiments are merely intended to describe specific embodiments, but are not intended to limit this application. As used in this specification and the appended claims of this application, singular expression forms "one", "a", and "this" are also intended to include expression forms such as "one or more", unless otherwise specified in the context clearly.

Reference to "an embodiment", "some embodiments", or the like described in this specification indicates that one or more embodiments of this application include a specific feature, structure, or characteristic described with reference to the embodiments. Therefore, statements such as "in an embodiment", "in some embodiments", "in some other embodiments", and "in other embodiments" that appear at different places in this specification do not necessarily mean referring to a same embodiment. Instead, the statements mean "one or more but not all of embodiments", unless otherwise specifically emphasized in another manner. The terms "include", "comprise", "have", and their variants all mean "including but not limited to", unless otherwise specifically emphasized in another manner.

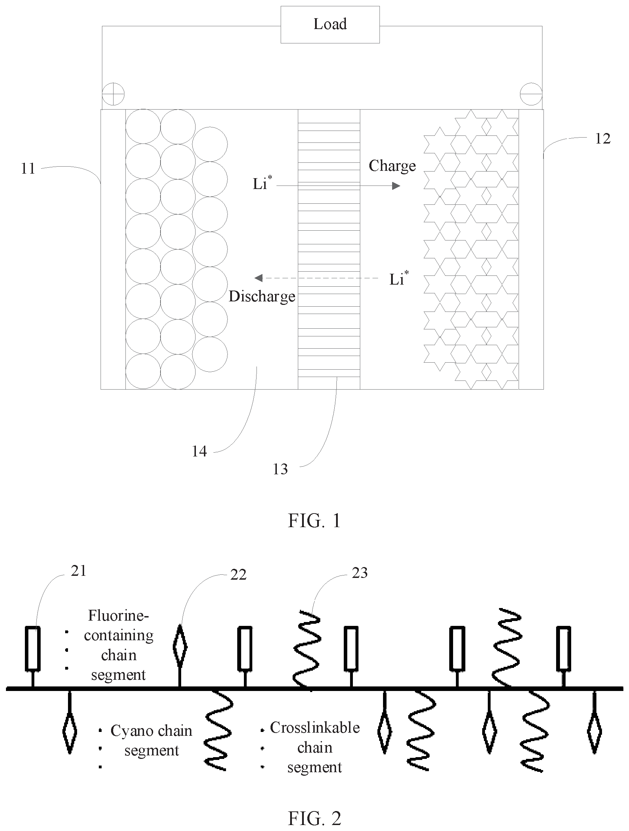

FIG. 1 is a diagram of a structure of a lithium-ion battery. As shown in FIG. 1, the lithium-ion battery may include a positive electrode plate 11, a negative electrode plate 12, a separator 13, and an electrolyte 14. The positive electrode plate 11 is obtained by drying a positive electrode slurry applied onto a positive electrode current collector. The positive electrode slurry usually contains a positive electrode material and a binder. The binder used for the positive electrode material of the battery needs to adapt to variable scenarios, and therefore needs to possess a plurality of excellent properties. These properties can be primarily summarized as follows: (1) excellent adhesion performance; (2) ability to withstand high-voltage environments; and (3) resistance to organic electrolytes. First, to adapt to high energy density of the battery, currently, the binder accounts for only 1% to 2% by mass in the positive electrode material. In such a low content, to further ensure adhesion of positive electrode powder and processing stability of the electrode plate, the binder for the positive electrode needs to possess an excellent adhesion capability. This requires strong interaction between a polymer and the powder, and also requires the polymer to have high mechanical strength. Then, during charging, a voltage on the positive electrode side may reach 4.0 V or higher, and for an LCO material, the voltage may even reach 4.5 V or higher. This requires the binder to have a high oxidation potential, so that no decomposition occurs during cycling of the battery, keeping the battery stable. Finally, the battery is filled with a large amount of organic electrolyte. As an organic polymer, the binder can easily dissolve in the organic liquid. However, the binder needs to remain stable in the electrolyte system without dissolving. This requires a swelling degree to be controlled to be 50% or less.

Embodiments of this application provide a binder including an acrylate polymer. FIG. 2 is a diagram of a molecular structure of an acrylate polymer according to an embodiment of this application. In an embodiment of this application, a number-average molecular weight of the acrylate polymer in the binder is 10 kDa to 3000 kDa, a molecular structure of the acrylate polymer contains side-chain groups, and the side-chain groups include a fluorine-containing chain segment 21, a cyano chain segment 22, and a crosslinkable chain segment 23, where a fluorine element accounts for 3% to 30% by mass in the molecular structure, and a cyano group accounts for 10% to 40% by mass in the molecular structure.

In the binder in embodiments of this application, the acrylate polymer does not undergo degradation or crosslinking under alkaline conditions, fundamentally resolving a problem of potential gelation of a slurry under highly alkaline conditions, thereby facilitating processing and preparation of the positive electrode slurry.

The molecular structure of the acrylate polymer contains the side-chain groups. A number of carbon atoms in the fluorine-containing chain segment in the side-chain groups is 2 to 8. A polymerizable monomer for forming the fluorine-containing chain segment may be selected from fluorine-containing alkenyl or fluorine-containing alkynyl. The fluorine-containing chain segment in the side-chain groups has high electronegativity of F and high C-F bond energy. High bond energy can endow the acrylate polymer with a stable backbone structure, so that the acrylate polymer has excellent solvent resistance and oxidation resistance. Low polarizability of the F atom leads to low molecular polarity of the prepared polymer, improving resistance to high voltages. The C-F bond can further undergo complexation with Li ions, improving ionic conductivity. The fluorine-containing chain segment is polyfluoroalkyl or perfluoroalkyl. The increase in a number of fluorine atoms can help further improve stability of the backbone structure.

The side-chain groups contain the cyano chain segment. A number of carbon atoms in the cyano chain segment is 2 to 4. A polymerizable monomer for forming the cyano chain segment is selected from cyano-containing alkenyl or cyano-containing alkynyl. The cyano group in the cyano chain segment in the side-chain groups provides excellent intermolecular forces. This endows the polymer with high rigidity and modulus, and can improve viscosity of a binder solution and stability of a slurry. In addition, the introduced cyano group with a strong coordination capability can undergo complexation with a transition metal on a surface of an electrode, to mask these active ions on the surface of the positive electrode, reducing decomposition of an electrolyte by the electrode.

The side-chain groups contain the crosslinkable chain segment. A number of carbon atoms in the crosslinkable chain segment is 2 to 20. A polymerizable monomer for forming the crosslinkable chain segment is selected from an alkenyl compound or alkynyl compound containing a group that is capable of undergoing a crosslinking reaction, where the crosslinking reaction group is selected from an epoxy group, an acetoacetate group, an amide group, a carboxyl group, and an N-substituted amide group. The crosslinkable chain segment in the side-chain groups can help form a chemically crosslinked network after the polymer is dried at a high temperature, improving shape stability. High crosslinking density can also reduce swelling in the electrolyte. Swelling in the electrolyte can be controlled by adjusting a ratio of crosslinkable monomers, achieving balance between electronic conductivity and ionic conductivity.

In an embodiment of this application, a glass transition temperature of the binder is - 20°C to 120°C, preferably 80°C to 100°C. The glass transition temperature can help expand application scenarios of the binder. In an embodiment of this application, a number-average molecular weight of the acrylate polymer may be 400 kDa to 600 kDa.

It may be understood that the binder in embodiments of this application includes the acrylate polymer, and may further include other additives, such as a conductive additive (conductive carbon black, carbon nanotubes, or graphene), a dispersing additive (a dispersant or a surfactant), a rheological additive, and a film-forming additive.

The specific molecular structure and composition of the binder in this application are described above. The following describes a specific method for preparing the binder. In a preparation process, the binder in embodiments of this application may be synthesized by using an emulsion polymerization method or a suspension polymerization method, or may be synthesized by using a batch, semi-continuous, or continuous synthesis process.

The binder in embodiments of this application may be a multipolymer, for example, may be formed through polymerization of n monomers (2 ≤ n ≤ 10). A structure of the multipolymer may be a combination of chain segments in a random, block, alternating, or graft arrangement. A form of polymerization between monomers is not particularly limited herein.

The method for preparing the binder in embodiments of this application includes the following steps.

S1: Add a mixed monomer containing a first polymerizable monomer, a second polymerizable monomer, and a third polymerizable monomer to a solvent to undergo a polymerization reaction, and perform purification, to obtain an acrylate polymer. A number-average molecular weight of the acrylate polymer is 10 kDa to 3000 kDa.

S2: Add the acrylate polymer to a solvent, to form a binder.

The first polymerizable monomer is a fluorine-containing acrylate monomer, and the fluorine-containing acrylate monomer accounts for 20% to 80% by mass in the mixed monomer, preferably 40% to 50%. A molecular formula of the fluorine-containing acrylate monomer is CH₂=CRCOO(CH₂)ₘCₙF₂ₙ₊₁, where R is H or CH₃, m ≥ 1, n ≥ 1, and m + n ≤ 12. Preferably, m is 1 to 2, and n is 1 to 4.

The second polymerizable monomer is a cyano-containing monomer, and the cyano-containing monomer accounts for 20% to 80% by mass in the mixed monomer, preferably 40% to 50%. The cyano-containing monomer is selected from at least one of acrylonitrile, methacrylonitrile, or chloroacrylonitrile. These substances can easily undergo copolymerization with vinyl and (meth)acrylate groups.

The third polymerizable monomer is a crosslinkable monomer that contains no fluorine and no cyano group, and the crosslinkable monomer accounts for 1% to 10% by mass in the mixed monomer, preferably 3% to 5%. The third polymerizable monomer is specifically a monomer that contains a crosslinkable group such as a carboxyl group, substituted acrylamide, glycidyl ether, and multi-functional silane, and that can undergo copolymerization with vinyl and (meth)acrylate groups. For example, the third polymerizable monomer contains at least one of an alkenyl group, an ether group, an amide group, and an ester group. For example, the third polymerizable monomer is selected from at least one of glycidyl (meth)acrylate, acetoacetoxyethyl methacrylate, (meth)acrylamide, (meth)acrylic acid, N-(n-butoxymethyl)acrylamide or N-(isobutoxymethyl)acrylamide, diacetone acrylamide, or N-methylol acrylamide.

The mixed monomer further includes an auxiliary monomer, and the auxiliary monomer is selected from at least one of alkyl (meth)acrylate, hydroxyalkyl (meth)acrylate, styrene, vinylpyrrolidone, or vinyl acetate.

In an embodiment, the method for preparing the binder in this application includes the following steps.

S11: Preparation of a monomer pre-emulsion: Disperse a first polymerizable monomer, a second polymerizable monomer, a third polymerizable monomer, an emulsifier, and an auxiliary component (a buffer, a masking agent, or a stabilizer) into a solvent, for example, water, at a designed ratio, and perform high-speed shear mixing for uniform emulsification, to form a stable pre-emulsion.

S12: Emulsion polymerization: Add 20% to 30% of the pre-emulsion to a reactor, add 20% of an initiator to initiate a polymerization reaction until the reaction mixture glows blue, and add the pre-emulsion and the initiator dropwise to the reactor. The reaction is kept at a specific temperature until all the pre-emulsion is added, and then the reaction continues at the same temperature for a period of time. An inert gas needs to be introduced for protection throughout the process.

S13: Polymer separation: Add a demulsifier to an emulsion obtained after the reaction is completed, perform solid-liquid separation to obtain polymer solid powder particles, and wash the polymer solid powder particles with deionized water to remove the remaining emulsifier, demulsifier, and inorganic salts. Perform drying and crushing to obtain a final product.

The following describes in detail the binder in this application with reference to specific embodiments and comparative examples.

### Embodiment 1

In this embodiment, a binder is prepared by using the following method.

In parts by weight, 7.5 parts of CO-436 emulsifier is added to 350 parts of water. The mixture is stirred for dissolving the emulsifier. 70 parts of acrylonitrile, 70 parts of trifluoroethyl methacrylate, 5 parts of glycidyl acrylate, and 1 part of acrylic acid monomer are added dropwise. The mixture is stirred at 350 rpm for 30 min for pre-emulsification at a temperature controlled to 10°C and with nitrogen introduced for protection. 80% of the pre-emulsion is removed from the reaction bottle. 0.2 initiator ammonium persulfate is added to the remaining pre-emulsion. The mixture is heated to 70°C to react for 1 hour until the mixture glows blue. The initiator and the pre-emulsion are dropwise added slowly for 3 hours with the temperature kept at 70°C. The mixture is heated to 75°C and reacts at this temperature for 1 h. The mixture is cooled down. Then, 100 parts of 5% NaCl solution is added and stirred for demulsification. Separation is performed. The solid binder powder is washed with pure water three times until no significant foam remains. A binder material can be obtained after drying.

The binder material is dissolved in N-methylpyrrolidone (NMP) to form a binder solution with a solid content of 5%, obtaining the binder.

### Embodiment 2

This embodiment provides a binder that differs from that of Embodiment 1 in that 70 parts of methacrylonitrile is used to replace the acrylonitrile, and 70 parts of perfluorobutylethyl methacrylate is used to replace the trifluoroethyl methacrylate. Except this, a polymerization process is the same as that in Embodiment 1.

### Embodiment 3

This embodiment provides a binder that differs from that of Embodiment 1 in that 70 parts of methacrylonitrile is used to replace the acrylonitrile, and 5 parts of N-methylol acrylamide is used to replace the glycidyl acrylate. Except this, a polymerization process is the same as that in Embodiment 1.

### Embodiment 4

This embodiment provides a binder that differs from that of Embodiment 1 in that 50 parts of acrylonitrile is used, and 90 parts of trifluoroethyl methacrylate is used. Except this, a polymerization process is the same as that in Embodiment 1.

### Embodiment 5

This embodiment provides a binder that differs from that of Embodiment 1 in that 70 parts of perfluorohexylethyl acrylate is used to replace the trifluoroethyl methacrylate. Except this, a polymerization process is the same as that in Embodiment 1.

### Embodiment 6

This embodiment provides a binder that differs from that of Embodiment 1 in that 3 parts of glycidyl acrylate and 3 parts of acrylic acid monomer are used. Except this, a polymerization process is the same as that in Embodiment 1.

### Comparative Example 1

In Comparative Example 1, a commercial lithium-battery-grade PVDF binder material is directly used and dissolved in N-methylpyrrolidone (NMP) to form a binder solution with a solid content of 5% for use.

### Comparative Example 2

This comparative example provides a binder that differs from that of Embodiment 1 in that 70 parts of ethyl methacrylate is used to replace the trifluoroethyl methacrylate. Except this, a polymerization process is the same as that in Embodiment 1.

### Comparative Example 3

This comparative example provides a binder that differs from that of Embodiment 1 in that 70 parts of trifluoroethyl methacrylate is used to replace the acrylonitrile. In other words, this comparative example includes no acrylonitrile and includes 140 parts of trifluoroethyl methacrylate. Except this, a polymerization process is the same as that in Embodiment 1.

### Comparative Example 4

This comparative example provides a binder that differs from that of Embodiment 1 in that the glycidyl acrylate and acrylic acid monomer are removed based on Embodiment 1. Except this, a polymerization process is the same as that in Embodiment 1.

The binders in Embodiment 1 to Embodiment 6 and Comparative Example 1 to Comparative Example 4 are used separately to prepare a positive electrode slurry and assemble a battery. A process of preparing the positive electrode slurry and the battery is as follows.

Positive electrode slurry mixing: 40 parts of binder (5 wt%), 2 parts of superconducting carbon black, and 96 parts of ternary positive electrode powder with an average particle size of 8 µm are added to 10 parts of NMP solution, and mixed by using a planetary mixer, obtaining a positive electrode slurry of a battery.

Battery electrode plate preparation: 10 µm aluminum foil is coated uniformly with the prepared positive electrode slurry by using an extrusion coater, dried at 100°C, and then subjected to roller-pressing by using a dual-roller press, obtaining a 150 µm double-side coated electrode plate.

Battery preparation: The obtained battery electrode plate is slit and die-cut, and paired and assembled with a double-side coated graphite negative electrode with a corresponding coating load, forming a laminated soft-pack battery. An electrolyte is added. Formation and capacity grading are performed, obtaining a 4000 mAh soft-pack cell. Performance testing is performed on the cell.

Battery testing: Data from the battery processing process and data from the battery performance testing are listed in Table 1.

### Testing Item and Testing Method

Viscosity: The viscosity of the binder is measured at room temperature 25±5°C by using a rotary viscometer (standard: GB/T 2794).

Swelling degree: A dry binder film is taken and weighed, obtaining a mass m1. The dry binder film is immersed in an electrolyte for a lithium battery at room temperature for 48 h. Then, the binder film is taken out and wiped to remove excess electrolyte from its surface, and then weighed, obtaining a mass m2. Swelling degree = (m2 - m1)/m1%.

Electrochemical window: A dry binder film is placed between two lithium plates and assembled into a symmetric coin cell. A voltage value at the onset of a current rise is recorded through linear sweep voltammetry by using an electrochemical workstation.

Peel strength: The binder, positive electrode powder, and conductive carbon are mixed in a mass ratio of 1.5%:97%:1.5% and dissolved in an NMP solvent. The mixture is dispersed and stirred at a high speed, obtaining a slurry with a solid content of 60%. The slurry is applied onto aluminum foil, and dried. Then, the electrode plate is measured for 180° peel strength by using double-sided tape.

Gelation time: The positive electrode slurry obtained through stirring is placed in an environment with 40% humidity. A change in fluidity of the positive electrode slurry is observed. The time when the slurry cannot flow is recorded as the gelation time.

Battery performance testing: The prepared binder is used in preparation of a ternary cell. The prepared soft-pack cell with a capacity of 3000 mAh is tested for battery performance, obtaining data on energy density per unit mass, initial efficiency, 1C step-charging cycles, and performance after 28-day storage at 60°C.

**Table 1**

| Indicator | Embodiment 1 | Embodiment 2 | Embodiment 3 | Embodiment 4 | Embodiment 5 | Embodiment 6 |
|---|---|---|---|---|---|---|
| Chemical structure | Fluorine-containing acrylate copolymer | Fluorine-containing acrylate copolymer | Fluorine-containing acrylate copolymer | Fluorine-containing acrylate copolymer | Fluorine-containing acrylate copolymer | Fluorine-containing acrylate copolymer |
| Appearance | White powder | White powder | White powder | White powder | White powder | White powder |
| Molecular weight (Mn) | 800000 Da | 800000 Da | 900000 Da | 700000 Da | 800000 Da | 900000 Da |
| Viscosity (5% NMP) | 910 CP | 1040 CP | 1530 CP | 530 CP | 790 CP | 2420 CP |
| Swelling degree | 55% | 45% | 32% | 78% | 84% | 28% |
| Electrochemi cal window | 4.4 V | 4.4 V | 4.4 V | 4.4 V | 4.4 V | 4.4 V |
| Peel strength | 15 N/m | 18 N/m | 16 N/m | 11 N/m | 8 N/m | 13 N/m |
| Energy density per unit mass | 277.2 Wh/kg | 280.4 Wh/kg | 278.1 Wh/kg | 281.3 Wh/kg | 278.1 Wh/kg | 279.1 Wh/kg |
| Initial efficiency after formation | 85.60% | 85.70% | 85.98% | 84.12% | 82.47% | 86.01% |
| 1C step-charging cycles | 83.9%@900 cycle | 84.7%@900 cycle | 82.4%@900 cycle | 80.1 %@900 cycle | 74.2%@900 cycle | 81.3%@900 cycle |
| 28-day storage at 60°C | 89.90% | 90.10% | 89.20% | 85.10% | 80.30% | 90.20% |
| Gelation time | >2 week@40% RH | >2 week@40% RH | >2 week@40% RH | >2 week@40% RH | >2 week@40% RH | >2 week@40% RH |

**Table 1 (continued)**

| Indicator | Comparative Example 1 | Comparative Example 2 | Comparative Example 3 | Comparative Example 4 |
|---|---|---|---|---|
| Chemical structure | Polyvinylidene difluoride copolymer | Acrylate copolymer | Acrylate copolymer | Acrylate copolymer |
| Appearance | White powder | White powder | White powder | White powder |
| Molecular weight (Mn) | 1100000 Da | 800000 Da | 800000 Da | 350000 Da |
| Viscosity (5% NMP) | 790 CP | 520 CP | 120 CP | 80 CP |
| Swelling degree | 40% | 54% | 280% | 560% |
| Electrochemical window | 4.7 V | 4.1 V | 4.3 V | 4.3 V |
| Peel strength | 20 N/m | 12 N/m | 10 N/m | 6 N/m |
| Energy density per unit mass | 279.4 Wh/kg | 260.1 Wh/kg | 267.8 Wh/kg | 265.7 Wh/kg |
| Initial efficiency after formation | 85.60% | 81.30% | 77.80% | 75.30% |
| 1C step-charging cycles | 83.6%@900 cycle | <60%@300 cycle | <60%@150 cycle | <60%@200 cycle |
| 28-day storage at 60°C | 90.10% | 89.70% | 89.70% | 60.70% |
| Gelation time | 2 h@40%RH | >2 week@40%RH | >2 week@40%RH | >2 week@40%RH |

It can be learned from the data in Table 1 that there is little difference between the batteries prepared by using the binders in Embodiment 1 to Embodiment 6 of this application and the battery prepared by using the PVDF binder in Comparative Example 1 in the electrochemical window, energy density per unit mass, and cycle performance. However, the bonding time of the binder in embodiments of this application is significantly longer than that of the PVDF in Comparative Example 1. This indicates that the binder in this application that replaces the conventional PVDF binder allows the battery to achieve equivalent electrical performance, and also avoids gelation during preparation of the positive electrode slurry.

It can be learned from the related testing data of Embodiment 1 and Comparative Example 2 that, when the molecular structure of the acrylate polymer contains no fluorine-containing chain segment, the electrochemical window is reduced, indicating that voltage resistance and oxidation resistance of the sample in Comparative Example 2 are significantly reduced. This indicates that, when the molecular structure of the acrylate polymer contains the fluorine-containing chain segment, the obtained polymer has a wide electrochemical window, can be stable at high voltages, and has good oxidation resistance and swelling resistance, exhibiting excellent performance after being used in a secondary battery.

It can be learned from the related testing data of Embodiment 1 and Comparative Example 3 that, when the molecular structure of the acrylate polymer contains no cyano chain segment, the cycle performance is reduced, indicating that strength, structural stability, and compatibility with the electrolyte of the sample in Comparative Example 3 are reduced. This indicates that the introduction of the cyano chain segment can increase viscosity of the binder and slurry, and allows the polymer to coordinate with transition metal ions in the positive electrode material through the cyano group, reducing catalytic decomposition of the electrolyte, thereby improving cycle stability.

It can be learned from the related testing data of Embodiment 1 and Comparative Example 4 that, when the molecular structure of the acrylate polymer contains no crosslinkable chain segment, the molecular weight and the adhesion are significantly reduced, and the swelling degree in the electrolyte is significantly increased. This indicates that the introduction of the crosslinkable chain segment can effectively reduce swelling in the electrolyte. Swelling in the electrolyte can be controlled by adjusting a ratio of crosslinkable monomers, achieving balance between electronic conductivity and ionic conductivity.

**In** conclusion, the binder in embodiments of this application features simple synthesis, unrestricted raw materials, and low costs. The binder in embodiments of this application can withstand alkaline environments without causing gelation of the positive electrode slurry. The positive electrode slurry in a highly alkaline sodium-ion battery system has normal fluidity for more than two weeks. Therefore, the binder is a critical material for practical use of highly alkaline materials such as a positive electrode of a sodium-ion battery, a high-nickel ternary positive electrode, and a lithium supplement.

The foregoing descriptions are merely specific implementations of this application, but are not intended to limit the protection scope of this application. Any variation or replacement readily figured out by a person skilled in the art within the technical scope disclosed in this application shall fall within the protection scope of this application. Therefore, the protection scope of this application shall be subject to the protection scope of the claims.

## Claims

1. A binder, wherein the binder comprises an acrylate polymer, a number-average molecular weight of the acrylate polymer is 10 kDa to 3000 kDa, a molecular structure of the acrylate polymer contains side-chain groups, and the side-chain groups comprise a fluorine-containing chain segment, a cyano chain segment, and a crosslinkable chain segment, wherein a fluorine element accounts for 3% to 30% by mass in the molecular structure, and a cyano group accounts for 10% to 40% by mass in the molecular structure.

2. The binder according to claim 1, wherein a number of carbon atoms in the fluorine-containing chain segment is 2 to 8, a number of carbon atoms in the cyano chain segment is 2 to 4, and a number of carbon atoms in the crosslinkable chain segment is 2 to 20.

3. The binder according to claim 1 or 2, wherein a polymerizable monomer for forming the fluorine-containing chain segment is selected from a fluorine-containing alkenyl compound or a fluorine-containing alkynyl compound.

4. The binder according to claim 3, wherein the fluorine-containing chain segment is perfluoroalkyl.

5. The binder according to any one of claims 1 to 4, wherein a polymerizable monomer for forming the cyano chain segment is selected from a cyano-containing alkenyl compound or a cyano-containing alkynyl compound.

6. The binder according to any one of claims 1 to 5, wherein a polymerizable monomer for forming the crosslinkable chain segment is selected from an alkenyl compound or alkynyl compound containing a group that is capable of undergoing a crosslinking reaction, wherein the crosslinking reaction group is selected from an epoxy group, an acetoacetate group, an amide group, a carboxyl group, and an N-substituted amide group.

7. The binder according to any one of claims 1 to 6, wherein a glass transition temperature of the binder is -20°C to 120°C.

8. A method for preparing a binder, comprising:
adding a mixed monomer containing a first polymerizable monomer, a second polymerizable monomer, and a third polymerizable monomer to a solvent to undergo a polymerization reaction, and performing purification, to obtain an acrylate polymer; and
adding the acrylate polymer to a solvent, to form a binder, wherein
the first polymerizable monomer is a fluorine-containing acrylate monomer, and the fluorine-containing acrylate monomer accounts for 20% to 80% by mass in the mixed monomer; the second polymerizable monomer is a cyano-containing monomer, and the cyano-containing monomer accounts for 20% to 80% by mass in the mixed monomer; the third polymerizable monomer is a crosslinkable monomer that contains no fluorine and no cyano group, and the crosslinkable monomer accounts for 1% to 10% by mass in the mixed monomer; and a number-average molecular weight of the acrylate polymer is 10 kDa to 3000 kDa.

9. The preparation method according to claim 8, wherein a molecular formula of the fluorine-containing acrylate monomer is CH₂=CRCOO(CH₂)ₘCₙF₂ₙ₊₁, wherein R is H or CH₃, m ≥ 1, n ≥ 1, and m + n ≤ 12.

10. The preparation method according to claim 8 or 9, wherein the cyano-containing monomer is selected from at least one of acrylonitrile, methacrylonitrile, or chloroacrylonitrile.

11. The preparation method according to any one of claims 8 to 10, wherein the third polymerizable monomer is selected from at least one of glycidyl (meth)acrylate, acetoacetoxyethyl methacrylate, (meth)acrylamide, (meth)acrylic acid, N-(n-butoxymethyl)acrylamide or N-(isobutoxymethyl)acrylamide, diacetone acrylamide, or N-methylol acrylamide.

12. The preparation method according to any one of claims 8 to 11, wherein the mixed monomer further comprises an auxiliary monomer, and the auxiliary monomer is selected from at least one of alkyl (meth)acrylate, hydroxyalkyl (meth)acrylate, styrene, vinylpyrrolidone, or vinyl acetate.

13. A battery, comprising a positive electrode plate, wherein the positive electrode plate comprises a positive electrode active substance and a binder, and the binder is selected from the binder according to any one of claims 1 to 7 or the binder obtained by using the preparation method according to any one of claims 8 to 12.

14. A power-consuming device, comprising a power-consuming component and the battery according to claim 13, wherein the battery supplies power to the power-consuming device.
